# EUROPEAN PATENT APPLICATION

(11) **EP 4 708 584 A1**
(43) Date of publication of application: **11.03.2026**
(21) Application number: 25200765.3
(22) Date of filing: 08.09.2025
(51) Int. Cl.: H01R 13/514, H01R 31/08

(54) **DATA CONTACT MEANS AND VEHICLE COMMUNICATIONS NETWORK COMPRISING DATA CONTACT MEANS**

(30) Priority: 09.09.2024 DE 102024125767
(71) Applicant: TE Connectivity Solutions GmbH, 8200 Schaffhausen (CH)
(72) Inventor: KLINGLER, Dominik, 8200 Schaffhausen (CH); WÜRKER, Robert, 8200 Schaffhausen (CH); BERGNER, Bert, 8200 Schaffhausen (CH)
(74) Representative: Patentanwaltskanzlei WILHELM & BECK

(57) **Abstract**

A data contact means (300, 400, 500, 900) has a first and a second contact module (100, 200). The first contact module (100) has a first contact housing (104) having a first contact element (101). The second contact module (200) has a second contact housing (204) having a second contact element (201). The first and the second contact housing (104, 204) each enclose a contact receiver. The first contact housing (104) has a first recess (107) extending through the first contact housing (104) and arranged laterally on the first contact housing (104), and the second contact housing (204) has a second recess (207) extending through the second contact housing (204) and arranged laterally on the second contact housing (204). The first recess (107) leads into the first contact receiver, and the second recess (207) leads into the second contact receiver. The first and the second recess (107, 207) are each arranged on the same side of the first and the second contact housing (104, 204) and are designed to receive a bridge-spring contact (301).

## Description

The present invention relates to a data contact means and to a vehicle communications network comprising a data contact means.

A twisted-core data line for a vehicle is known from the publication DE 10 2022 101 623 A1. Portions of the cores are connected to electrically conductive bridge connectors. The bridge connectors of the various cores of the data line are arranged parallel to each other and spaced apart at the connection point. An impedance of the connection point, for a design frequency, is configured to a predefined impedance value by a predefined distance between the bridge connectors and a predefined width of the bridge connectors.

An object of the present invention is to provide an improved data contact means and a vehicle communications network comprising a data contact means. This object is achieved by a data contact means and a vehicle communications network having the features of the respectively independent claims. Advantageous developments are given in dependent claims.

A data contact means for data exchange between network participants of a communications network, in particular a vehicle communications network, has a first contact module and a second contact module that is arranged next to the first contact module. The first contact module has a first contact housing and a first contact arrangement that has at least one first contact element. The second contact module has a second contact housing and a second contact arrangement that has at least one second contact element. The first contact housing and the second contact housing each circumferentially enclose, relative to a mounting axis, a contact receiver and at an end face have a contact opening, which extends along the mounting axis. The first contact element is arranged in the contact receiver of the first contact housing, and the second contact element is arranged in the contact receiver of the second contact housing. The first contact element is designed for contacting a correspondingly realized first mating-contact element, and the second contact element is designed for contacting a correspondingly realized second mating-contact element. The first contact housing has a first recess extending through the first contact housing and arranged laterally on the first contact housing, and the second contact housing has a second recess extending through the second contact housing and arranged laterally on the second contact housing. The first recess is arranged along the mounting axis, offset with respect to the first contact opening, in the first contact housing, and leads into the first contact receiver. The second recess is arranged along the mounting axis, offset with respect to the second contact opening, in the second contact housing, and leads into the second contact receiver. The first recess and the second recess are each arranged on the same side of the first and second contact housing and are designed to receive a bridge-spring contact. Advantageously, the first and the second contact element may be connected to each other by means of the bridge-spring contact. Via the first and the second contact element of the data contact means, it is thus possible to realize a continuous bus line, which remains intact even if the data contact means is disconnected from a network participant of a communications network.

In one embodiment, the data contact means has a bridge-spring contact having at least one first contact spring and a second contact spring that is connected to the first contact spring. The first contact spring engages through the first recess and contacts the first contact element. The second contact spring engages through the second recess and contacts the second contact element. The first and the second contact element are thereby advantageously connected to each other via the bus spring contact.

In one embodiment, the bridge-spring contact has a connection portion realized in the form of a plate. The connection portion extends along a straight line that is inclined with respect to the mounting axis. The first contact spring and the second contact spring are arranged at mutually opposite ends of the connection portion and are connected to the connection portion.

In one embodiment, the bridge-spring contact has a support portion that is realized in the form of a plate. The support portion is connected to the connection portion and arranged, relative to the straight line, between the first contact spring and the second contact spring. The support portion is advantageously designed to support the bridge-spring contact on at least one of the contact housings and to hold it in a wanted position.

In one embodiment, the first recess is made in the form of a slot in the first contact housing and/or the second recess is made in the form of a slot in the second contact housing. Advantageously, the contact springs of the bridge-spring contact can be latched into the slot-shaped recesses.

In one embodiment, the first contact housing has a first support surface on an outer circumferential side that faces away from the first contact receiver. The first support surface is orientated obliquely with respect to the mounting axis and adjoins the first recess. The second contact housing has a second support surface on an outer circumferential side that faces away from the second contact receiver. The second support surface is orientated obliquely with respect to the mounting axis and adjoins the second recess. Advantageously, the bridge-spring contact is supported by the support surfaces in the contact housings in that the contact springs each bear against a respective support portion.

In one embodiment, the data contact means has a housing. The housing encloses a first module receiver, a second module receiver and a bridge-spring receiver. The first contact module is arranged in the first module receiver, and the second contact module is arranged in the second module receiver. The bridge-spring receiver is arranged on the first module receiver and on the second module receiver and leads into the first module receiver and into the second module receiver, respectively. Advantageously, the data contact means may be realized as a PCB connector, in which case the housing has contact pins for terminal connection to a PCB, or printed circuit board.

In one embodiment, the bridge-spring contact is arranged in the bridge-spring receiver, and the first contact spring engages in the first module receiver, and the second contact spring engages in the second module receiver.

In one embodiment, the data contact means is designed for data exchange based on the Ethernet, CAN-FD, CAN-XL, 10BASE-T1S or A2B protocol, and/or the data contact means is designed for data exchange at a rate of 10 Mbit/s or 100 Mbit/s. However, the data contact means may also be designed for data exchange based on a different protocol and/or a different data transmission rate. Advantageously, this provides a solution within the data contact device for realizing a continuous bus line.

In one embodiment, the first contact element is connected to a first cable having at least one first data line. The second contact element is connected to a second cable having at least one second data line. The data lines are shielded or unshielded.

In one embodiment, a further first contact element of the first contact module is connected to a further first data line of the first cable. A further second contact element is connected to a further second data line of the second cable. The first data lines of the first cable are twisted, and the second data lines of the second cable are twisted and in each case are untwisted in the region of the contact elements. The untwisted length is less than 16.5 mm. The untwisted length specifies a length, or a region, within which the data lines are not twisted, in order to connect them to the corresponding contact elements. Advantageously, the untwisted length is particularly short, which reduces electromagnetic crosstalk between the data lines.

According to one of the embodiments described, a vehicle communications network has at least one first network participant and at least one data contact means. The first network participant has a termination element having the first mating-contact element and the second mating-contact element for terminal connection of the data contact means.

In one embodiment, the first network participant is connected to at least one second network participant via the bridge-spring contact. Advantageously, the data connection, or the bus line, to the second network participant is maintained even if the data contact means is disconnected from the first network participant.

In one embodiment, the first and the second mating-contact element of the termination element of the first network participant are connected to each other by means of a bridge contact. Advantageously, the bus connection provided by the bus spring contact is maintained even if the bus spring contact is damaged. A prerequisite for this is that the data contact means is connected to the termination element.

The data contact means and the vehicle communications network are explained in detail below with reference to schematic drawings, in which:
Fig. 1: shows a first contact module, in two perspective views;
Fig. 2: a data contact means, in two perspective views;
Fig. 3: shows a cross-sectional view through the first contact module of the data contact means of Fig. 2;
Fig. 4: shows a data contact means according to a further embodiment, in two perspective views;
Fig. 5: shows a data contact means according to a further embodiment, in two perspective views;
Fig. 6: shows a contact means according to a further embodiment, in a perspective view;
Fig. 7: shows a data contact means according to a further embodiment in combination with a network participant of a communications network, in a perspective view;
Fig. 8: shows the data contact means with the network participant according to Fig. 7 and the data contact means of Fig. 6, in a perspective view; and
Fig. 9: shows a communications network with a plurality of network participants and data contact means.

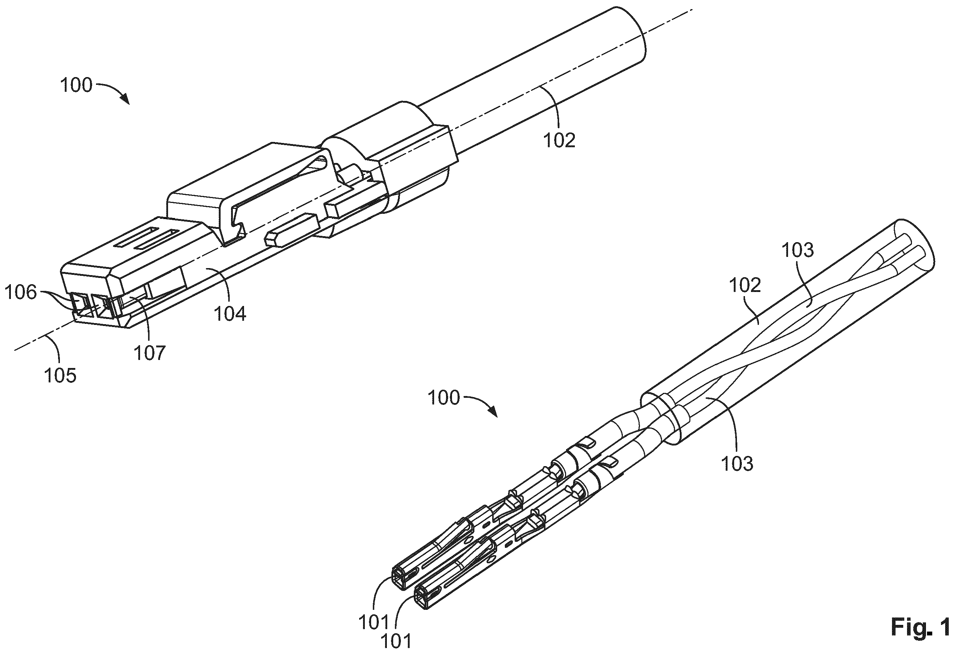

Fig. 1 shows a first contact module 100, in two different perspective views.

The first contact module 100 has a contact arrangement having at least one first contact element 101. Preferably, the first contact module 100 has a further first contact element 101 in addition to the first contact element 101, as represented by way of example in Fig. 1. The first contact module 100 is connected to a first cable 102 comprising a first data line 103 and a further first data line 103. The first contact element 101 is connected to the first data line 103. The further first contact element 101 is connected to the further first data line 103. However, the further first data line may also be omitted if the first contact module 100 does not have a further first contact element 101. The first data lines 103 are shown in Fig. 1 only in a first perspective view with a transparently represented first cable 102.

The first data lines 103 are, for example, of a twisted and unshielded design. In this case, the first contact module 100 is realized as a UTP contact module (unshielded twisted pair, UTP for short). However, the first data lines 103 may also be of a shielded design. The twisted first data lines 103 are untwisted in the region of the first contact elements 101. It is also possible for the first data lines 103 to have no twisting at all.

The first contact module 100 has a first contact housing 104. The first contact housing 104 is only shown in a second perspective view in Fig. 1 so that the first contact elements 101 can be recognized in the first perspective view. The first contact housing 104 encloses a contact receiver circumferentially relative to a mounting axis 105. At an end face, the first contact housing 104 has a contact opening 106 that extends along the mounting axis 105. The first contact element 101 is arranged in the contact receiver of the first contact housing 104. Since the further first contact element 101 is provided in the first contact module 100, the first contact housing 104 encloses a further circumferentially relative to the mounting axis 105. At an end face, the first contact housing 104 has a further contact opening 106 that extends along the mounting axis 105. The further first contact element 101 is arranged in the further contact receiver of the first contact housing 104. However, the further contact receiver and the further contact opening 106 may also be omitted.

The first contact elements 101 are designed for contacting correspondingly realized first mating-contact elements. As an example, the first contact elements 101 are realized as female electrical connectors. Alternatively, the first contact elements 101 may also be realized as male electrical connectors.

The first contact housing 104 has a first recess 107 extending through the first contact housing 104 and arranged laterally on the first contact housing 104. The first recess 107 is arranged along the mounting axis 105, offset with respect to the first contact opening 106, in the first contact housing 104 and leads into the first contact receiver. The first contact housing 104 also has a further first recess 107, extending through the first contact housing 104 and arranged laterally on the first contact housing 104, which is arranged along the mounting axis 105, offset with respect to the further first contact opening 106, in the first contact housing 104 and which leads into the further first contact receiver. The further first recess 107 cannot be seen in the second perspective view of Fig. 1, as it is realized opposite the first recess 107 in the first contact housing 104. The first recess 107 and the further first recess 107 are each made in the form of a slot, for example, in the first contact housing 104. The further first recess 107 may also be omitted if no further first contact element 101 is provided in the first contact module 100.

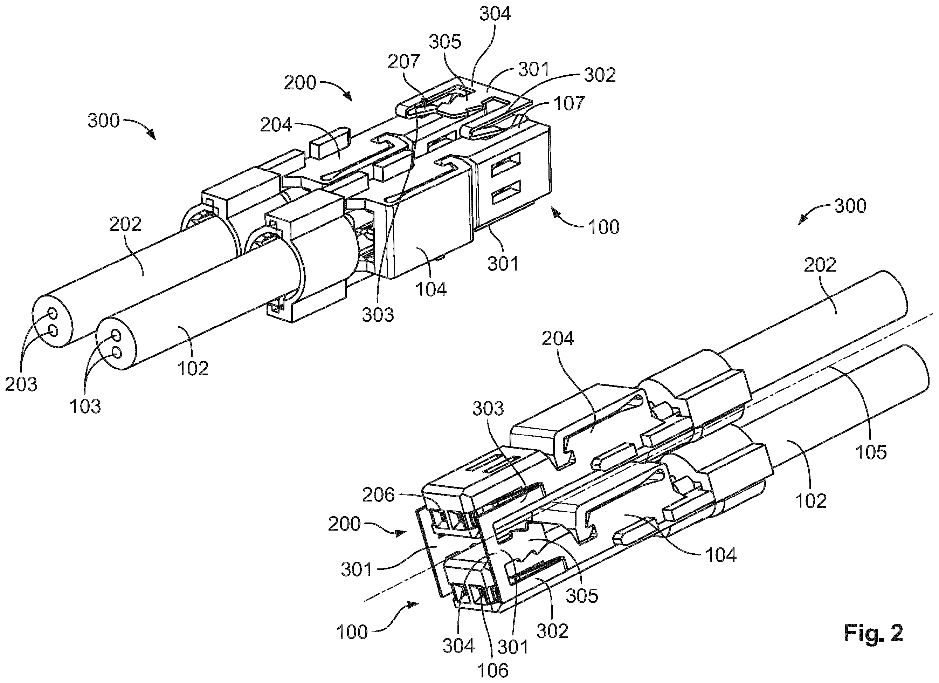

Fig. 2 shows a data contact means 300 in two perspective views. The data contact means 300 is designed for data exchange between network participants of a communications network, for example a vehicle communications network. The data contact means 300 has the first contact module 100 and a second contact module 200. The second contact module 200 is of the same design the first contact module 100 according to Fig. 1. Corresponding elements of the second contact module 200 that are merely optional in the first contact module 100 are also merely optional in the second contact module 200.

The second contact module 200 is arranged next to the first contact module 100. The second contact module 200 is arranged next to the first contact module 100 in such a way that the first contact housing 104 and a second contact housing 204 of the second contact module 200 bear against each other. A second contact element 201 of the second contact module 200 is arranged above the first contact element 101. A further second contact element 201 of the second contact module 200 is arranged above the further first contact element 101. In other words, the first contact elements 101 are arranged within a first plane, while the second contact elements 201 are arranged in a second plane, which is arranged parallel to the first plane. This arrangement may also be referred to as a vertical arrangement of the contact modules 100, 200. In a horizontal arrangement of the contact modules 100, 200, the first contact element 101, the further first contact element 101, the second contact element 201 and the further second contact element 201 would be arranged within a common plane. The vertical arrangement of the contact modules 100, 200 advantageously reduces electromagnetic crosstalk between the contact modules 100, 200, since the contact modules 100, 200 are arranged in such a way that electromagnetic field strengths generated during operation by one of the contact modules 100, 200 in the region of the respective other contact module 100, 200 are lower than in the case of a horizontal arrangement.

The first recess 107 and a second recess 207 are each arranged on the same side of the first contact housing 104 and the second contact housing 204, and are designed to receive a first bridge-spring contact 301. Also, the further first recess 107 and a further second recess 207 are each arranged on the same side of the first contact housing 104 and the second contact housing 204, respectively, and are designed to receive a second bridge-spring contact 301.

In the exemplary embodiment, the data contact means 300 has two bridge-spring contacts 301, which are arranged opposite each other relative to the mounting axis 105. A first bridge-spring contact 301 engages in the first recess 107 and the second recess 207. A second bridge-spring contact 301 engages in the further first recess 107 and the further second recess 207. At least one of the bridge-spring contacts 301 may also be omitted if no further contact elements 101, 201 are provided. However, both bridge-spring contacts 301 may also be omitted.

The bridge-spring contacts 301 each have at least one first contact spring 302 and a second contact spring 303 that is connected to the first contact spring 302. The first contact spring 302 of the first bridge-spring contact 301 engages through the first recess 107 and contacts the first contact element 101. The second contact spring 303 engages through the second recess 207 and contacts the second contact element 201. Correspondingly, a further first contact spring 302 of the second bridge-spring contact 301 engages through the further first recess 107 and contacts the further first contact element 101. A further second contact spring 303 of the second bridge-spring contact 301 engages through the further second recess 207 and contacts the further second contact element 201.

The bridge-spring contacts 301 each have a connection portion 304 realized in the form of a plate. The connection portions 304 each extend along a straight line that is inclined with respect to the mounting axis 105. The first contact springs 302 and the second contact springs 303 are arranged at respectively opposite ends of the connection portions 304 and are connected to the connection portions 304. In addition, the bridge-spring contacts 301 each have a support portion 305, which is realized in the form of a plate. The support portions 305 are each connected to the connection portions 304 and are arranged, relative to the straight lines, between the first contact springs 302 and the second contact springs 303. On the sides of the support portions 305 opposite the connection portions 304, the support portions 305 each have a free end.

The fact that the connection portion 304 and the support portion 305 of the bridge-spring contacts 301 are realized in the form of plates means that they each extend along a plane. The connection portions 304 and the support portions 305 may have different geometric shapes. The connection portions 204 are rectangular, as an example, but they may also be of a different design. For example, the connection portions 304 may have curved edges, or contours. In general, the geometric shape of the connection portions 304 is not limited to the variants shown and described. Unlike the connection portions 304, the support portions 305, which likewise also in the form of plates, are not realized in a rectangular shape, but have a plurality of undercuts, for example. The support portions 305 may also have any geometric shape in the plane within which they extend. The support portions 305 may also be omitted.

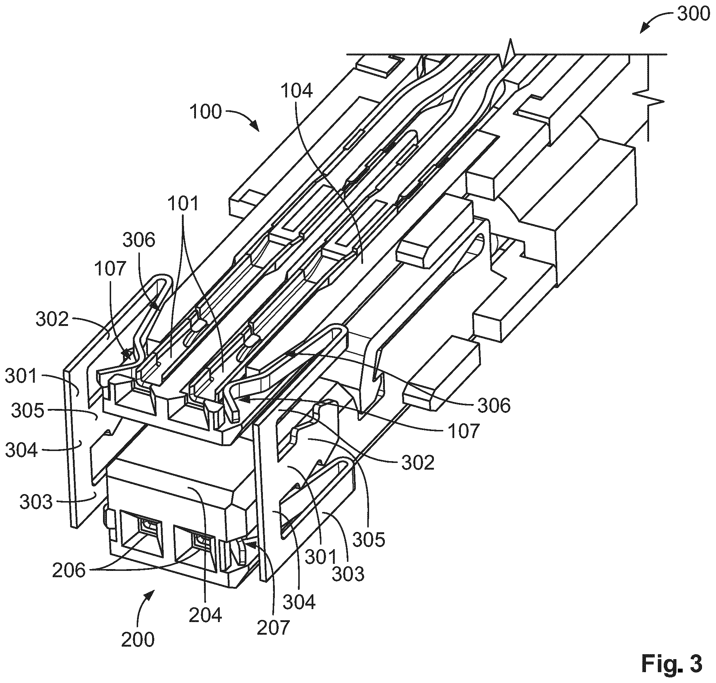

Fig. 3 shows a cross-sectional view through the first contact module 100 of the data contact means 300 of Fig. 2 along a plane that is spanned by the mounting axis 105 and the straight line along which the connection portions 304 of the first bridge-spring contact 301 extend. The plane of the cross-sectional view thus extends in the region of the first contact elements 101 of the first contact module 100. Fig. 3 thus illustrates the contacting of the first contact elements 101 by means of the first contact springs 302 of the bridge-spring contacts 301. Reference designations used hitherto are retained.

The first contact housing 104 has a first support surface 306 on an outer circumferential side that faces away from the first contact receiver. The first support surface 306 is orientated obliquely with respect to the mounting axis 105 and adjoins the first recess 107. Accordingly, the first contact housing 104 has a further first support surface 306 on the outer circumferential side that faces away from the first contact receiver. The further first support surface 306 is orientated obliquely with respect to the mounting axis 105 and adjoins the further first recess 107.

The second contact housing 204 has a second support surface 306 on an outer circumferential side that faces away from the second contact receiver. The second support surface 306 is orientated obliquely with respect to the mounting axis 105 and adjoins the second recess 207. The second contact housing 204 has a further second support surface 306 on the outer circumferential side that faces away from the second contact receiver. The further second support surface 306 is orientated obliquely with respect to the mounting axis 105 and adjoins the further second recess 207. The second support surfaces 306 cannot be seen in Fig. 3, as only a cross-section through the first contact module 100 is shown.

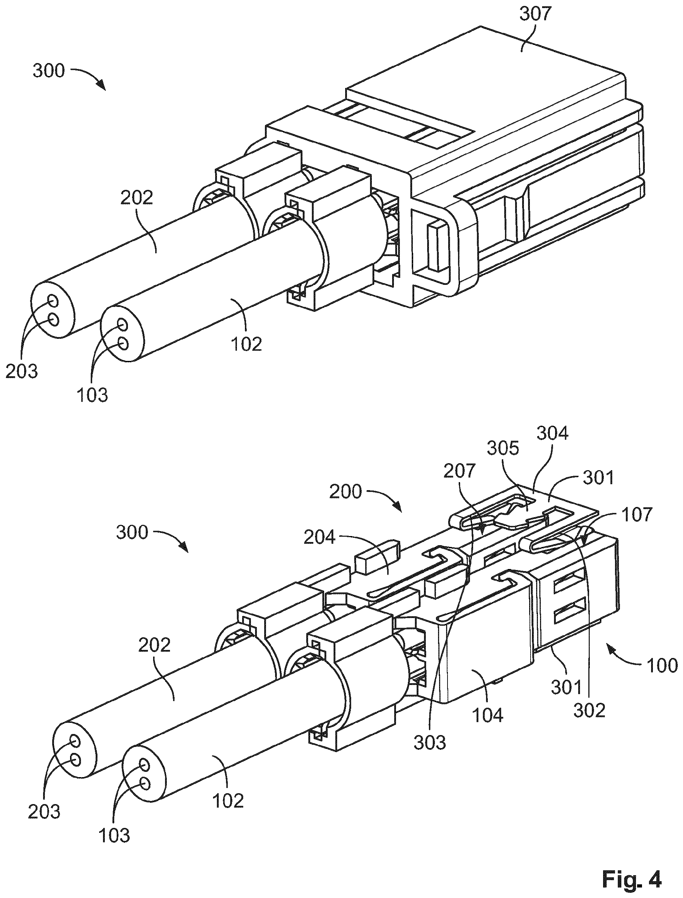

Fig. 4 shows a data contact means 300 according to a further embodiment in two perspective views. The data contact means 300 of Fig. 4 has the elements of the data contact means 300 of Fig. 3 and additional elements. Only the additional elements are described below. The reference designations used hitherto are retained.

The data contact means has a housing 307. In Fig. 4, the housing 307 is not represented in one of the perspective views, in order to illustrate the arrangement of the contact modules 100, 200 and the optional bridge-spring contacts 301 in parallel. The housing 307 encloses a first module receiver, a second module receiver and at least one bridge-spring receiver. The first contact module 100 is arranged in the first module receiver, and the second contact module 200 is arranged in the second module receiver. The bridge-spring receiver is arranged on the first module receiver and on the second module receiver, and leads into the first module receiver and into the second module receiver, respectively. The first module receiver, the second module receiver and the bridge-spring receiver cannot be seen in Fig. 4, as they are formed on the inner side of the housing 307. The bridge-spring contacts 301 are arranged in the bridge-spring receivers, and the first contact springs 302 engage in the first module receiver, and the second contact springs 303 engage in the second module receiver.

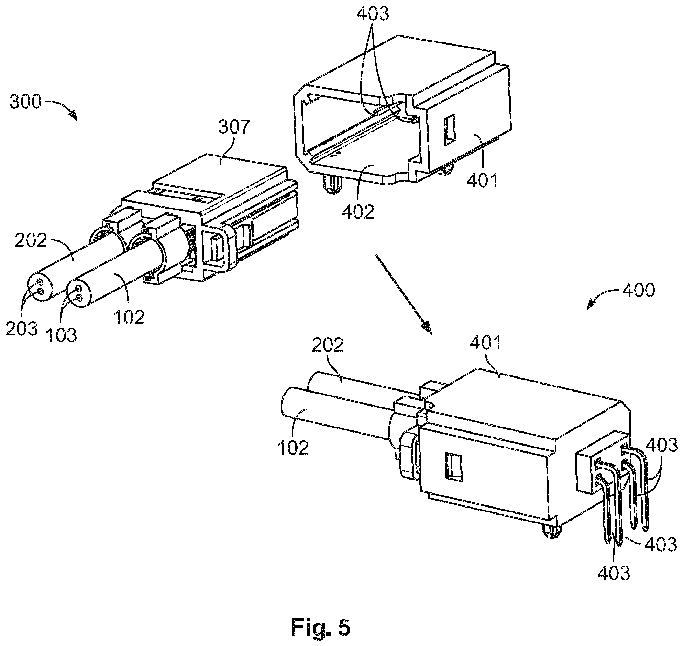

Fig. 5 shows a data contact means 400 according to a further embodiment, in two perspective views. The reference designations used hitherto are retained. The data contact means 400 of Fig. 5 has similarities with the data contact means 300 of Fig. 4. Only the differences between the data contact means 400 of Fig. 5 and the data contact means 300 of Fig. 4 are explained below. Reference designations used hitherto are retained.

The data contact means 400 of Fig. 5 is realized as a PCB connector 400. The PCB connector 400 has the data contact means 300 of Fig. 4 and a further housing 401. The further housing 401 has an opening and a receiver 402 for the data contact means 300 of Fig. 4. In the assembled state, the data contact means 300 is arranged in the receiver 402 of the further housing 401. The further housing 401 additionally has contact pins 403, which are arranged opposite the opening of the further housing 401. The contact pins 403 are realized as electrical leadthroughs through the further housing 401 and are designed to terminate the data contact means 400 to a printed circuit board (PCB for short).

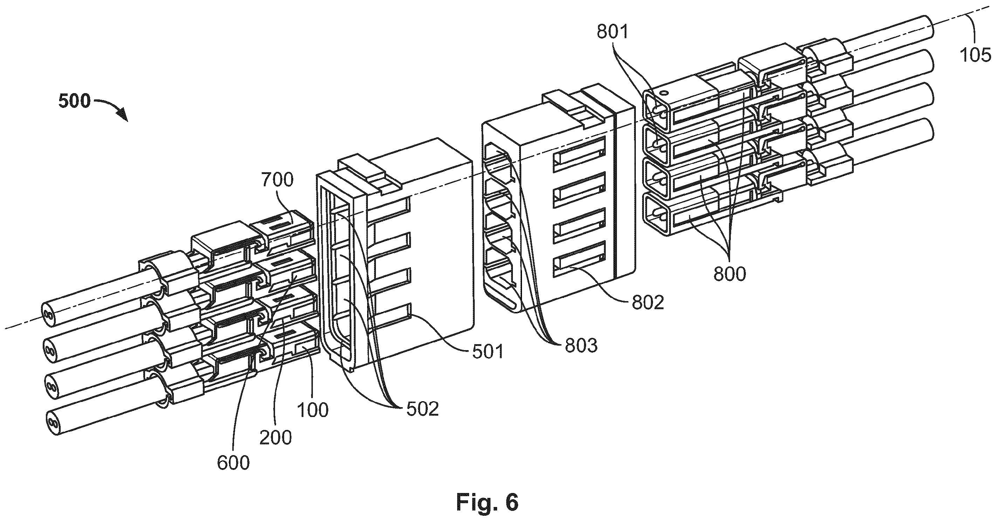

Fig. 6 shows a data contact means 500 according to a further embodiment, in a perspective view. The reference designations used hitherto are retained.

In addition to the first and the second contact module 100, 200, the data contact means 500 has a third and a fourth contact module 600, 700. The third and the fourth contact module 600, 700 are of the same design as the first and the second contact module 100, 200. The data contact means 500 may also have a different number of contact modules 100, 200, 600, 700. The contact modules 100, 200, 600, 700 are arranged vertically one above the other, i.e. the pairs of contact elements 101, 201, 601, 701 of the contact modules 100, 200, 600, 700 are arranged within planes extending parallel to each other, with the contact elements 101, 201, 601, 701 of a contact module 100, 200, 600, 700 each being arranged in a separate plane.

The data contact means 500 also has an additional housing 501, which is designed to receive the contact modules 100, 200, 600, 700. The additional housing 501 has four through-openings 502. The arrangement of the contact modules 100, 200, 600, 700 is designed to engage in the additional housing 501 through the through-openings 502 and to be guided through the through-openings 502, such that the contact modules 100, 200, 600, 700 protrude from the through-openings 502. The arrangement of the contact modules 100, 200, 600, 700 is thus feasible because of the additional housing 501.

The data contact means 500 also has four mating-contact modules 800. The mating-contact modules 800 have mating-contact elements 801 that are complementary to the contact elements 101, 201, 601, 701. The contact elements 101, 201, 601, 701 are each designed for contacting a corresponding, or complementary, mating-contact element 801. The mating-contact modules 800 are likewise arranged vertically one above the other.

The data contact means 500 also has a further additional housing 802, which is realized to receive the mating-contact modules 800. The further additional housing 802 has two mutually opposite further openings 803. The arrangement of the mating-contact modules 800 is designed to engage in the further additional housing 802 through one of the further openings 803. At the opposite further opening 803 in the further additional housing 802, the mating-contact modules 800 can protrude from the further additional housing 802. The arrangement of the mating-contact modules 800 is thus feasible because of the further additional housing 802.

If the arrangement of the contact modules 100, 200, 600, 700 is guided through the additional housing 501 and the mating-contact modules 800 are guided through the further additional housing 802, the arrangement of the contact modules 100, 200, 600, 700 can be connected and contacted to the arrangement of the mating-contact modules 800 along the mounting axis 105, with the contact elements 101, 201, 601, 701 of the contact modules 100, 200, 600, 700 being connected and contacted to the mating-contact elements 801 of the mating-contact modules 800.

In the exemplary embodiment that has female contact elements 101, 201, 601, 701, the mating-contact elements 801 are realized as male connectors. After connecting and contacting, the additional housing 501 and the further additional housing 802 may be arranged adjacent to each other in the region of the contact modules 100, 200, 600, 700 connected to the mating-contact modules 800, and connected to each other in order to protect a connection between the contact modules 100, 200, 600, 700 and the mating-contact modules 800.

The data contact means 500 of Fig. 6 may also be referred to as an inline terminal 500, which in the exemplary embodiment of Fig. 6 is realized as a quadruple inline terminal 500. The data contact means 500 may be used, for example, in modular connector systems. In this case, bridge-spring contacts 301 are not required and may be omitted, as the bridge-spring contacts 301 connect the contact elements 101, 201 of different contact modules 100, 200 to each other, which is not absolutely necessary in the case of the inline terminal 500, as it is typically only designed to relay data.

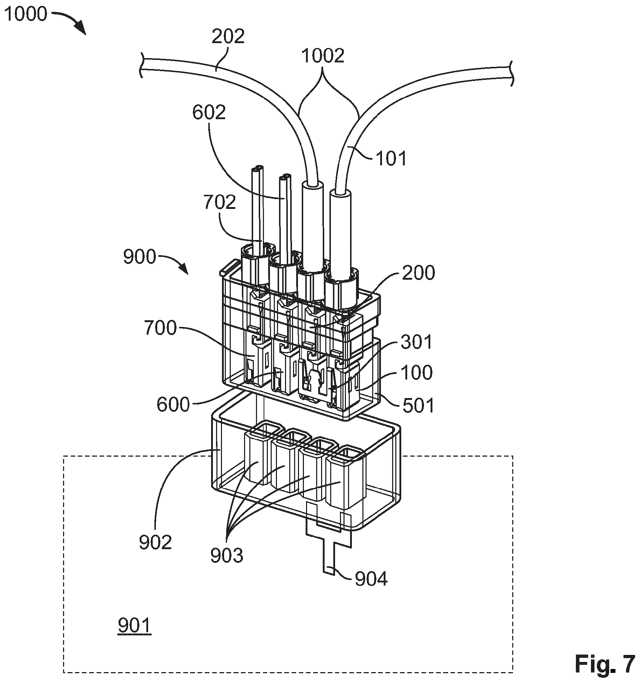

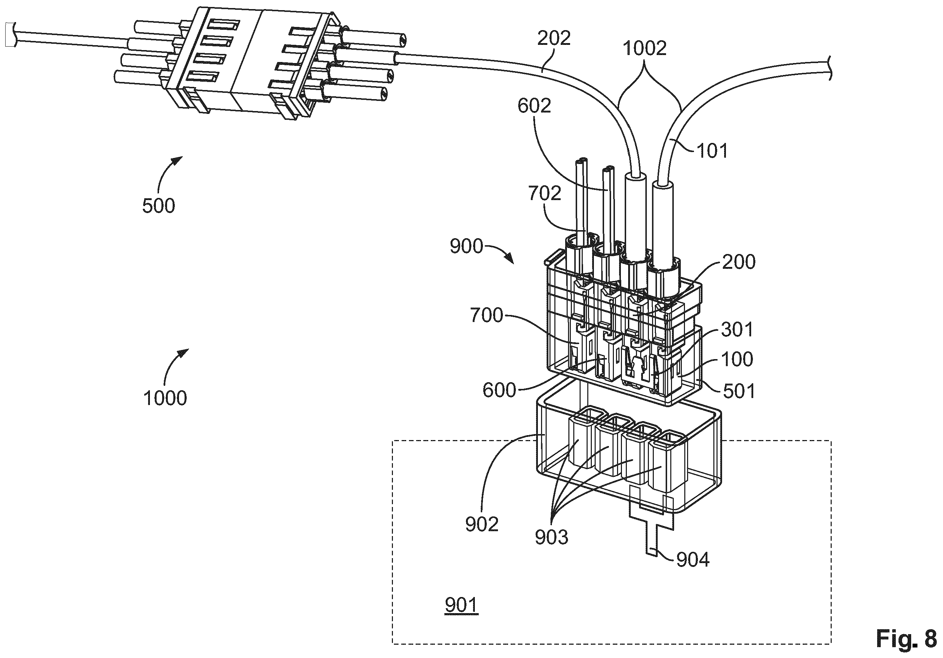

Figs. 7 and 8 each show an example of communications networks 1000, in which, for reasons of simplicity, only one network participant 901 is shown. The communications networks 1000 may be realized, for example, as vehicle communications networks 1000.

Fig. 7 shows a data contact means 900 with a network participant 901 of a communications network, in a perspective view. The reference designations used hitherto are retained.

The data contact means 900 of Fig. 7 differs from the data contact means 500 of Fig. 6 in that it only comprises the arrangement of the contact modules 100, 200, 600, 700 and the additional housing 501, while the mating-contact modules 800 and the further additional housing 802 are omitted. The network participant 901 may be realized, for example, as a control device. The network participant 901 has a termination element 902 having further mating-contact modules 903 for connecting and contacting the contact modules 100, 200, 600, 700. Each further mating-contact module 903 has at least one mating-contact element 801 for connecting to a contact element 101, 201, 601, 701.

In contrast to the data contact means 500 of Fig. 6, the data contact means 900 of Fig. 7 includes the bridge-spring contacts 301, although the second bridge-spring contact 301 may be omitted. The first contact module 100 is connected to the second contact module 200 by means of the bridge-spring contacts 301. In this case, the first contact element 101 of the first contact module 100 is connected to the second contact element 201 of the second contact module 200. In addition, in the exemplary embodiment having two contact elements 101, 201 per contact module 100, 200 and two bridge-spring contacts 301, the further first contact element 101 is connected to the further second contact element 201. In this way, the first cable 102 connected to the first contact module 100 is connected, via the bridge-spring contacts 301, to the second cable 202 connected to the second contact module 200. The cables 102, 202 connected to each other by the bridge-spring contacts 301 form a continuous bus line 1002 with line topology. This bus line 1002 remains completely intact and is not disconnected even if the data contact means 900 of Fig. 7 is disconnected from the network participant 901, i.e. from the termination element 902 of the network participant 901.

By means of the bridge-spring contacts 301, the data contact means 300, 400, 900 of Figs. 2 to 5 and 7 may be realized, for example, for data exchange based on the Ethernet, CAN-FD, CAN-XL, 10BASE-T1S or A2B protocols. However, the data exchange is not limited to the protocols mentioned and may also be based on another protocol. For example, the data contact means 900 may be designed for data exchange at a rate of 10 Mbit/s or 100 Mbit/s, or another rate. In the exemplary embodiment of Fig. 7, for example, a 10 Mbit/s Ethernet connection or a 10 Mbit/s CAN-FD/XL bus or a 10Base-T1S bus may be realized.

In addition, a first mating-contact module 903 of the termination element 902 of the network participant 901, which is designed for contacting the first contact module 100, is connected and bridged to a second mating-contact module 903 of the termination element 902, which is designed for contacting the second contact module 200, by means of at least one bridge contact 904. This has the advantage that the bus line 1002, when the data contact means 900 has been connected to the termination element 902 of the network participant 901, remains intact and continuous even if the at least one bridge-spring contact 301 is defective. In this case, the bridge contact 904 of the termination element 902 of the network participant 901 thus takes over the function of the at least one bridge-spring contact 301. The bridge contact 904 provides double protection for data exchange via the bus line 1002 when the data contact means 900 is plugged in. This can reduce the error probability, in particular in applications that include, for example, safety-critical functions.

Unlike the first and the second contact module 100, 200, the third and the fourth contact module 600, 700 are not connected to each other by means of bridge-spring contacts 301. However, bridge-spring contacts 301 may also be provided for the third and the fourth contact module 600, 700 in order to provide a further continuous bus line 1002, although this is not absolutely necessary.

Fig. 8 shows the data contact means 900 with the network participant 901 according to Fig. 7 and the data contact means 500 of Fig. 6, realized as an inline terminal 500, in a perspective view. The reference designations used hitherto are retained.

As an example, the second contact module 200 is connected to the inline terminal 500 of Fig. 6 via the second cable 202. More precisely, the second contact module 200 is connected to one of the mating-contact modules 800 of the inline terminal 500 via the second cable 202. The third and the fourth contact module 600, 700 may likewise be designed to be connected to the inline terminal 500 of Fig. 6 via their own third and fourth cables 602, 702 respectively, which is not represented in Fig. 8 for reasons of simplicity.

The fourth contact module 700 and the associated further mating-contact module 903 may be designed, for example, for data exchange based on the Ethernet protocol, and the data exchange may be effected at a data rate of 100 Mbit/s, for example. The third contact module 600 and the associated further mating-contact module 903 may be designed, for example, for data exchange based on the A2B protocol (automotive audio bus, A2B for short).

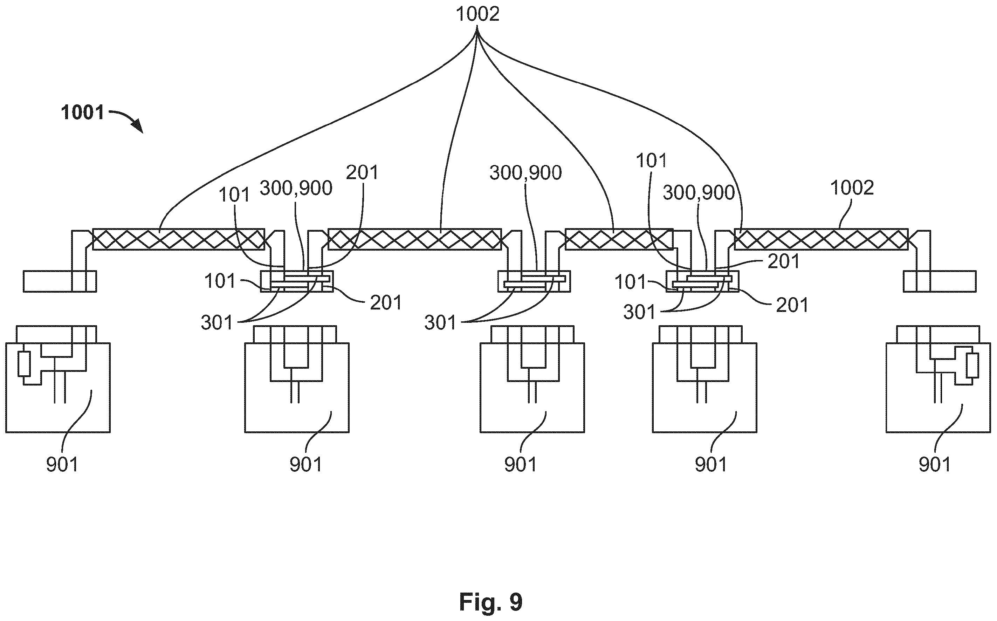

Shown schematically in Fig. 9 is a further communications network 1001 with a plurality of network participants 901 and data contact means 300, 900. Five network participants 901 are represented by way of example. The reference designations used hitherto are retained.

Each data contact means 300, 900 has two bridge-spring contacts 301, which respectively contact first contact elements 101 to second contact elements 201, and further first contact elements 101 to further second contact elements 201. The second bridge-spring contacts 301 may also be omitted. The further communications network 1001 has a line topology, i.e. the network participants 901 are connected in series with each other. Each network participant 901 is connected to a data contact means 300, 900. Directly adjacent network participants 901 of the further communications network 1001 are connected to each other in such a way that a selected network participant 901 is connected to a preceding network participant 901 by means of the first cable 102 of the first contact module 100, and that the network participant 901 concerned is connected to a subsequent network participant 901 by means of the second cable 202 of the second contact module 200. As a result, the further communications network 1001 has a completely continuous bus line 1002. The bus line 1002 has a line topology corresponding to the topology of the further communications network 1001. The bus line 1002 remains completely intact, even if at least one of the data contact means 300, 900 is disconnected from a network participant 901.

### List of reference designations

- 100: first contact module
- 101: first contact element, further first contact element
- 102: first cable
- 103: first data line, further first data line
- 104: first contact housing
- 105: mounting axis
- 106: first contact opening
- 107: first recess
- 200: second contact module
- 201: second contact element, further second contact element
- 202: second cable
- 203: second data line, further second data line
- 204: second contact housing
- 206: second contact opening
- 207: second recess
- 300: data contact means according to one embodiment
- 301: bridge-spring contact
- 302: first contact spring
- 303: second contact spring
- 304: connection portion
- 305: support portion
- 306: first support surface, second support surface
- 307: housing
- 400: data contact means according to a further embodiment
- 401: further housing
- 402: receiver in the further housing
- 403: contact pins
- 500: data contact means according to a further embodiment
- 501: additional housing
- 502: through-openings
- 600: third contact module
- 601: third contact element
- 602: third cable
- 700: fourth contact module
- 701: fourth contact element
- 702: fourth cable
- 800: mating-contact module
- 801: mating-contact element
- 802: further additional housing
- 803: further openings in the further additional housing
- 900: data contact means according to a further embodiment
- 901: network participant
- 902: termination element
- 903: further mating-contact module/ module slot
- 904: bridge contact
- 1000: communications network
- 1001: further communications network
- 1002: bus line

## Claims

1. Data contact means (300, 400, 500, 900) for data exchange between network participants (901) of a communications network (1001, 1001), in particular a vehicle communications network (1001, 1001),
the data contact means (300, 400, 500, 900) having a first contact module (100) and a second contact module (200) that is arranged next to the first contact module (100),
- the first contact module (100) having a first contact housing (104) and a first contact arrangement that has at least one first contact element (101),
- the second contact module (200) having a second contact housing (204) and a second contact arrangement that has at least one second contact element (201),
- the first contact housing (104) and the second contact housing (204) each circumferentially enclosing, relative to a mounting axis (105), a contact receiver and at an end face having a contact opening (106), which extends along the mounting axis (105),
- the first contact element (101) being arranged in the contact receiver of the first contact housing (104), and the second contact element (201) being arranged in the contact receiver of the second contact housing (204),
- the first contact element (101) being designed for contacting a correspondingly realized first mating-contact element, and the second contact element (201) being designed for contacting a correspondingly realized second mating-contact element (801),
- the first contact housing (104) having a first recess (107) extending through the first contact housing (104) and arranged laterally on the first contact housing (104), and the second contact housing (204) having a second recess (207) extending through the second contact housing (204) and arranged laterally on the second contact housing (204),
- the first recess (107) being arranged along the mounting axis (105), offset with respect to the first contact opening (106), in the first contact housing (104), and leading into the first contact receiver,
- the second recess (207) being arranged along the mounting axis (105), offset with respect to the second contact opening (206), in the second contact housing (204), and leading into the second contact receiver,
- the first recess (107) and the second recess (207) each being arranged on the same side of the first and second contact housing (104, 204) and being designed to receive a bridge-spring contact (301).

2. Data contact means (300, 400, 500, 900) according to Claim 1,
- having a bridge-spring contact (301) having at least one first contact spring (302) and a second contact spring (303) that is connected to the first contact spring (302),
- the first contact spring (302) engaging through the first recess (107) and contacting the first contact element (101),
- the second contact spring (303) engaging through the second recess (207) and contacting the second contact element (201).

3. Data contact means (300, 400, 500, 900) according to Claim 2,
- the bridge-spring contact (301) having a connection portion (304) realized in the form of a plate,
- the connection portion (304) extending along a straight line that is inclined with respect to the mounting axis (105),
- the first contact spring (302) and the second contact spring (303) being arranged at mutually opposite ends of the connection portion (304) and being connected to the connection portion (304).

4. Data contact means (300, 400, 500, 900) according to Claim 3,
- the bridge-spring contact (301) having a support portion (305) that is realized in the form of a plate,
- the support portion (305) being connected to the connection portion (304) and arranged, relative to the straight line, between the first contact spring (302) and the second contact spring (303).

5. Data contact means (300, 400, 900) according to any one of the preceding claims,
- the first recess (107) being made in the form of a slot in the first contact housing (104) and/or the second recess (207) being made in the form of a slot in the second contact housing (204).

6. Data contact means (300, 400, 500, 900) according to any one of the preceding claims,
- the first contact housing (104) having a first support surface (306) on an outer circumferential side that faces away from the first contact receiver,
- the first support surface (306) being orientated obliquely with respect to the mounting axis (105) and adjoining the first recess (107),
- the second contact housing (204) having a second support surface (306) on an outer circumferential side that faces away from the second contact receiver,
- the second support surface (306) being orientated obliquely with respect to the mounting axis (105) and adjoining the second recess (207).

7. Data contact means (300, 400, 500, 900) according to any one of the preceding claims,
- having a housing (307),
- the housing (307) enclosing a first module receiver, a second module receiver and a bridge-spring receiver,
- the first contact module (100) being arranged in the first module receiver, and the second contact module (200) being arranged in the second module receiver,
- the bridge-spring receiver being arranged on the first module receiver and on the second module receiver and leading into the first module receiver and into the second module receiver, respectively.

8. Data contact means (300, 400, 500, 900) according to Claim 7,
- the bridge-spring contact (301) being arranged in the bridge-spring receiver, and the first contact spring (302) engaging in the first module receiver, and the second contact spring (303) engaging in the second module receiver.

9. Data contact means (300, 400, 500, 900) according to any one of the preceding claims,
the data contact means (300, 400, 500, 900) being designed for data exchange based on the Ethernet, CAN-FD, CAN-XL, 10BASE-T1S or A2B protocol,
and/or
the data contact means (300, 400, 500, 900) being designed for data exchange at a rate of 10 Mbit/s or 100 Mbit/s.

10. Data contact means (300, 400, 500, 900) according to any one of the preceding claims,
the first contact element (101) being connected to a first cable (102) having at least one first data line (103),
the second contact element (201) being connected to a second cable (202) having at least one second data line (203),
the data lines (103, 104) being shielded or unshielded.

11. Data contact means (300, 400, 500, 900) according to Claim 10,
a further first contact element (101) of the first contact module (100) being connected to a further first data line (103) of the first cable (102),
a further second contact element (201) being connected to a further second data line (203) of the second cable (202),
the first data lines (103) of the first cable (102) being twisted, and the second data lines (203) of the second cable (202) being twisted and in each case being untwisted in the region of the contact elements,
the untwisted length being less than 16.5 mm.

12. Vehicle communications network (1000, 1001)
having at least one first network participant (901) and at least one data contact means (300, 400, 900) according to any one of the preceding claims,
the first network participant (901) having a termination element (902) having the first mating-contact element (903) and the second mating-contact element (903) for terminal connection of the data contact means (300, 400, 500, 900).

13. Vehicle communications network (1000, 1001) according to Claim 12,
- the data contact means (300, 400, 900) being realized according to Claim 2,
- the first network participant (901) being connected in respect of data to at least one second network participant (901) via the bridge-spring contact (301).

14. Vehicle communications network (1000, 1001) according to Claim 13, the data contact means (300, 400, 900) being terminated to the termination element (902),
the first and the second mating-contact element (903) of the termination element (902) of the first network participant (901) being connected to each other by means of a bridge contact (904).
